# EUROPÄISCHE PATENTANMELDUNG

(11) **EP 0 622 415 A2**
(43) Veröffentlichungstag der Anmeldung: **02.11.1994**
(21) Anmeldenummer: 94105986.7
(22) Anmeldetag: 18.04.1994
(51) Int. Cl.: C08L 67/02

(54) **Thermoplastische Formmassen auf Basis von Polyalkylenterephthalat und Ethylen-Vinylacetat-Polymeren**

(30) Priorität: 29.04.1993 DE 4314042
(71) Anmelder: BAYER AG, 51368 Leverkusen (DE)
(72) Erfinder: Magerstedt, Herbert, Dipl.-Ing., D-47445 Moers (DE); Zander, Klaus, Dr., D-45478 Mülheim (DE); Paul, Friedemann, Dipl.-Ing., D-51469 Bergisch Gladbach (DE); Leimann, Gerhard, Dipl.-Ing., D-42657 Solingen (DE)

(57) **Zusammenfassung**

Thermoplastische Formmassen aus
A) 10 bis 96 Gew.-Teilen Polyalkylenterephthalat,
B) 5 bis 60 Gew.-Teilen Ethylen-Vinylacetat-Copolymeren
und gebenenfalls einer Flammschutzmittelkombination aus
C) 5 bis 20 Gew.-Teilen halogenhaltiger organischer Verbindung und
D) 0,5 bis 7,5 Gew.-Teilen Antimontrioxid oder Antimonpentoxid,
wobei die Summe aus A + B + C + D 100 ergibt.

## Beschreibung

Die Erfindung betrifft thermoplastische Formmassen auf der Basis von Polyalkylenterephthalat und Ethylen-Vinylacetat-Mischpolymerisat sowie aus diesen thermoplastischen Formmassen herstellbare und verwendbare schlagzähe, sehr leichfließende und temperaturbestandige Einstellungen für die Kabelummantelung bzw. für Formkörper, die ein entsprechendes Anforderungsprofil aufweisen.

Die Aufgabe der vorliegenden Erfindung ist, eine thermoplastische Formmasse auf Basis Polyalkylenterephthalat mit handelsüblichen und damit wirtschaftlichen Flammschutzmitteln in einer zähelastischen Form bereitzustellen, um eine Kabelummantelung bzw. aus dieser thermoplastischen Formmasse herstellbare thermoplastische Formkörper für relevante Anwendungsprofile herstellen zu können.

Die erfindungsgemäßen thermoplastischen Mischungen zeigen eine gute Fließfähigkeit bei einer gleichzeitig guten Temperaturbeständigkeit sowie einer hohen Zähelastizität.

Dabei ist insbesondere überraschend, daß der Blendpartner Polyalkylenterephthalat mit Ethylen-Vinylacetat-Mischpolymerisat ohne weitere Zusätze wie Verträglichkeitsvermittler eine nicht zu erwartende gute Verträglichkeit aufweist.

Gegenstand der vorliegenden Anmeldung sind thermoplastische Formmassen aus
A) 10 bis 96, vorzugsweise 20 bis 90, insbesondere 80 bis 60 Gew.-Teilen Polyalkylenterephthalat,
B) 5 bis 60, vorzugsweise 15 bis 50, insbesondere 20 bis 40 Gew.-Teilen Ethylen-Vinylacetat-Copolymeren,
und gegebenenfalls einer Flammschutzkombination aus
C) 5 bis 20, vorzugsweise 7,5 bis 15 Gew.-Teilen halogenhaltigen, organischen Verbindungen und
D) 0,5 bis 7,5, vorzugsweise 2 bis 6 Gew.-Teilen Antimontrioxid oder Antimonpentoxid,
wobei die Summe aus A + B + C + D 100 ergibt.

### Komponente A:

Polyalkylenenterephthalate im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80, vorzugsweise 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Sebacinsäure, Azelainsäure, Cyclohexandiessigsäure.

Die bevorzugten Polyalkylenterephthalate können neben Ethylen- bzw. Butandiol-1,4-glykolresten bis Zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3,2-Ethylpropandiol-1,3, Neopentylglykol, Pentandiol-1,5, Hexandiol-1,6, Cyclohexan-dimethanol-1,4, 3-Methylpentandiol-2,4, 2-Methylpentandiol-2,4, 2,2,4-Trimethylpentandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-OS 2 407 674, 2 407 776, 2 715 932).

Die Polyalkylenterepthalate können durch Einbau relativ kleiner Mengen 3- oder 4-wertiger Alkohole oder 3- oder 4-basischer Carbonsäure, wie sie z.B. in der DE-OS 1 900 270 und der US-PS 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähig: Derivaten (z.B. deren Dialkylestern) und Ethylenglykol und/oder Butandiol-1,4 hergestellt worden sind (Polyethylen- und Polybutylentherephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente A vorzugsweise verwendeten Polyalkylenterephthalate besitzen im allgemeinen eine Schmelzviskosität von ca. 300 bis 1 000 Pa·s, vorzugsweise 350 bis 900 Pa·s, gemessen nach der Methode gemäß Göttfert.

Ein Teil der Polyalkylenterephthalat-Komponente kann durch aromatisches Polycarbonat und gegebenenfalls kautschukelastische Polymerisate mit einer Glasübergangstemperatur von <-10°C ersetzt werden. Auch die erfindungsgemäße Zugabe von wiederaufgearbeiteten Bestandteilen der thermoplastischen Formmassen ist möglich, ohne daß die genannten Eigenschaften sich nachteilig verändern.

### Komponente B

Ethylen-Vinylacetat-Copolymere (Komponente C) im Sinne der Erfindung sind primär durch radikalische Lösungspolymerisation bei mittlerem Druck hergestellte Polymere mit einem Vinylacetatgehalt zwischen 30 und 95 Gew.-%, vorzugsweise 40 bis 90 Gew.-%, insbesondere 50 bis 90 Gew.-%. Die Ethylenvinylacetat-Copolymere haben in der Regel Schmelzindices von nicht fließfähig bis 1000, vorzugsweise von 0,1 bis 20, gemessen bei 190°C und 2,16 kp Belastung nach DIN 53 735.

### Komponente C

Als halogenhaltige, insbesondere bromierte, organische Verbindungen seien beispielhaft genannt:
Ethylen-1,2-bistetrabromphthalimid,
Epoxidiertes Tetrabrombisphenol A-Harz,
Tetrabrombisphenol-A-oligocarbonat,
Pentabrompolyacrylat.

Bevorzugt werden epoxidiertes Tetrabrombisphenol-A und Tetrabrombisphenol-A-Oligocarbonat verwendet.

Epoxidiertes Tetrabrombisphenol-A ist ein bekanntes Diepoxidharz mit einem Molekulargewicht von etwa 350 bis etwa 2 100, vorzugsweise 360 bis 1 000, besonders bevorzugt 370 bis 400, und besteht im wesentlichen aus mindestens einem Kondensationsprodukt von Bisphenol A und Epihalogenhydrin und wird beschrieben durch die Formel (I) 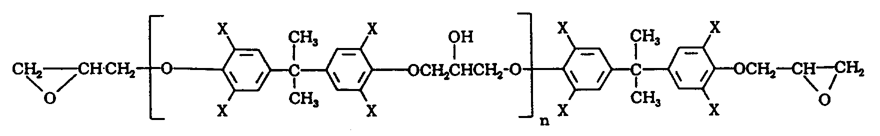
worin X Wasserstoff oder Brom darstellt und n eine Durchschnittszahl zwischen Null und weniger als 2,3 ist (vgl. z.B. EP-A 180 471).

Tetrabrombisphenol-A-oligocarbonat ist beschrieben durch die Formel (II), wobei die Oligomere entweder mit Phenol oder mit Tribromphenol terminiert werden: 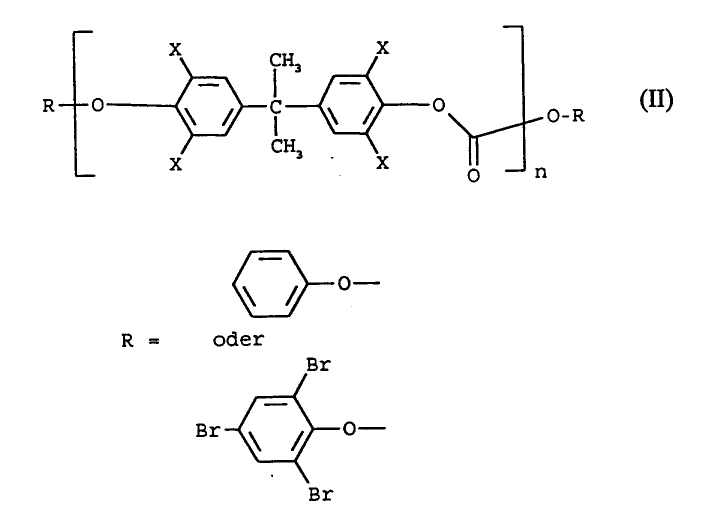
worin X Wasserstoff oder Brom darstellt, n ist eine Durchschnittszahl zwischen 4 und 7.

Tetrabrombisphenol-A-oligocarbonat ist bekannt und nach bekannten Verfahren herstellbar.

### Komponente D

Antimontrioxid bzw. Antimonpentoxid sind allgemein bekannte Verbindungen.

Die Formmassen können Nukleierungsmittel wie Mikrotalk enthalten. Weiterhin können die Formmassen übliche Zusatzstoffe wie Gleit- und Entformungsmittel, Verarbeitungsstabilisatoren, Füll- und Verstarkungsstoffe sowie Farbstoffe und Pigmente enthalten.

Die Nukleierungsmittel und üblichen Zusatzstoffe außer Füll- und Verstärkungsstoffe können in Mengen von ca. 0,1 bis 3 Gew.-Teilen, bezogen auf 100 Gew.-Teile A + B + C + D zugegeben werden.

Füll- und Verstärkungsstoffe können in Mengen von 1 bis 10 Gew.-Teilen, bezogen auf 100 Gew.-Teile A + B + C + D zugegeben werden.

Die Herstellung der erfindungsgemäßen Formmassen kann in den üblichen Mischaggregaten wie Walzen, Knetern, Ein- oder Mehrwellenextrudern durch Vermischen der Einzelkomponenten erhalten werden.

### Beispiele

Die in den Beispielen angegebenen Komponenten werden gemischt und in einer Spritzgußmaschine bei üblichen PBT-Verarbeitungsbedingungen (Massetemperatur ca. 260°C) zu Prüfkörpern verarbeitet.

### Beispiel

56,5 Gew.-% Polybutylenterephthalat (PBT),
Schmelzviskosität 850 +/- 50 Pa·s (Göttfert) (relative Lösungsviskosität 1,834 bis 1,875, gemessen bei 25°C in einer 0,5 %igen Lösung aus Phenol und o-Dichlorbenzol, Mischungsverhältnis 1:1 Gewichtsteile),
30,0 Gew.-% Ethylen-Vinylacetat-Mischpolymerisat,
Vinylacetat-Gehalt: 80 % (Levapren® KA 8479, Bayer AG)
10,0 Gew.-% epoxidiertes Tetrabrombisphenol-A: Maktheshim® F 2400,
Eurobrom BV NL
3,5 Gew.-% Antimontrioxid

**Tabelle**

| Eigenschaften | Dim. | Vorschrift | Beispiel |
|---|---|---|---|
| MVI, 260°C/5 kg | °C | DIN 53 735 | 50 |

| Zugversuch: | | | |
|---|---|---|---|
| Streckspannung | N/mm² | DIN 53 455 | 32 |
| Streckdehnung | % | DIN 53 455 | 4,7 |
| Reißdehnung | % | DIN 53 455 | 61 |
| E-Modul | N/mm² | DIN 53 457-t | 1560 |

| Biegeversuch: | | | |
|---|---|---|---|
| Biegespannung bei Höchstkraft | N/mm² | DIN 53 452 | 39 |
| Randfaserdehnung | % | DIN 53 452 | 5,6 |
| 3,5 % Biegesp. | N/mm² | DIN 53 452 | 36 |
| E-Modul | N/mm² | DIN 53 457-B3 | 1370 |
| Izod-Kerbschlagz. | kJ/m² | ISO180/1A | 17 |

| Brandverhalten | | | |
|---|---|---|---|
| UL 94, 1,6 mm | Klasse | IEC707 | V 1 |

Die erfindungsgemäße Formmasse zeigt gute mechanische Eigenschaften, insbesondere beim Dehnungsverhalten (Zug- und Biegeversuch) sowie eine gute Kerbschlagzahigkeit und ausreichendes Brandverhalten.

## Patentansprüche

1. Thermoplastische Formmassen aus
A) 10 bis 96 Gew.-Teilen Polyalkylenterephthalat,
B) 5 bis 60 Gew.-Teilen Ethylen-Vinylacetat-Copolymeren
und gegebenenfalls einer Flammschutzmittelkombination aus
C) 5 bis 20 Gew.-Teilen halogenhaltiger organischer Verbindung und
D) 0,5 bis 7,5 Gew.-Teilen Antimontrioxid oder Antimonpentoxid,
wobei die Summe aus A + B + C + D 100 ergibt.

2. Formmasse gemäß Anspruch 1, aus
A) 20 bis 90 Gew.-Teilen Polyalkylenterephthalat,
B) 15 bis 50 Gew.-Teilen Ethylen-Vinylacetat-Copolymeren
und gegebenenfalls einer Flammschutzmittelkombination aus
C) 7,5 bis 15 Gew.-Teilen halogenhaltigen organischen Verbindung und
D) 2 bis 6 Gew.-Teilen Antimontrioxid oder Antimonpentoxid.

3. Formmasse gemaß Anspruch 1, wobei als Komponente C) Ethylen-1,2-bis-tetrabrompenthalimid, epoxidiertes Tetrabrombisphenol-A-Harz, Tetrabrombisphenol-A-oligocarabonat oder Pentabrompolyacrylat oder Mischungen daraus eingesetzt werden.

4. Formmasse gemäß Anspruch 1, worin Komponente D) epoxidiertes Tetrabrombisphenol-A-Harz ist, welches beschrieben wird durch die Formel (I) 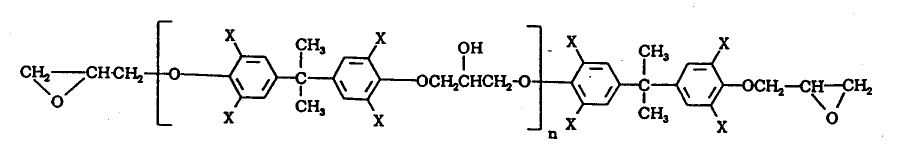 worin X Wasserstoff oder Brom darstellt, und n eine Durchschnittszahl zwischen Null und weniger als 2,3 ist, oder worin Komponente D) Tetrabrombisphenol-A-oligocarbonat der Formel (II) ist 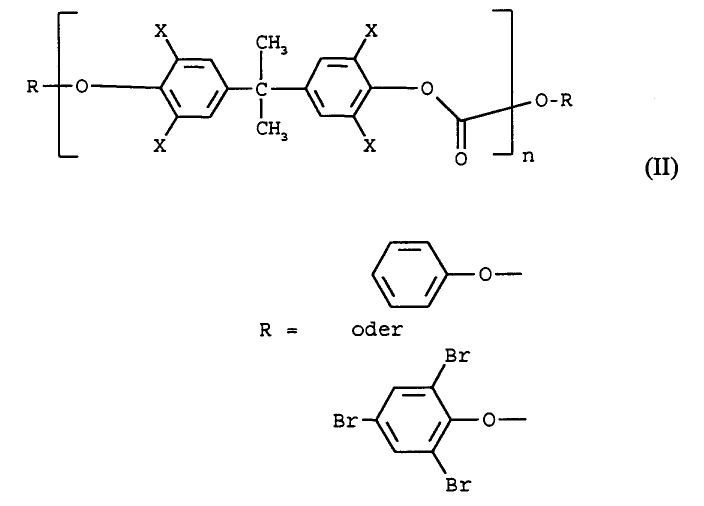 worin X Wasserstoff oder Brom darstellt, n ist eine Durchschnittszahl zwischen 4 und 7.

5. Verwendung von Formmassen gemaß Anspruch 1 zur Herstellung von Formkörpern.

6. Formkörper, hergestellt aus Formmassen gemaß Anspruch 1.
